**Europäisches Patentamt**

**European Patent Office**

**Office européen des brevets**

(19)

(11) Veröffentlichungsnummer: **0 053 381**
**A1**

(12)

# EUROPÄISCHE PATENTANMELDUNG

(21) Anmeldenummer: **81109983.7**

(22) Anmeldetag: **28.11.81**

(51) Int. Cl.³: **C 09 D 5/36, B 05 D 7/08**

(30) Priorität: **01.12.80 DE 3045210**

(43) Veröffentlichungstag der Anmeldung: **09.06.82**
**Patentblatt 82/23**

(84) Benannte Vertragsstaaten: **AT BE CH DE FR GB IT LI NL SE**

(71) Anmelder: **BASF Farben + Fasern Aktiengesellschaft, Am Neumarkt 30, D-2000 Hamburg 70 (DE)**

(72) Erfinder: **Kaminski, Ernst, Maiskamp 4, D-4901 Hiddenhausen (DE)**
Erfinder: **Sandmann, Franz-Josef, Tulpenweg 36, D-4400 Münster (DE)**

(74) Vertreter: **Habbel, Hans-Georg, Dipl.-Ing., Postfach 3429 Am Kanonengraben 11, D-4400 Münster (DE)**

(54) **Pigmentierter Überzug und Verfahren zu seiner Herstellung.**

(57) Ein pigmentierter Überzug auf einer Holzoberfläche, bei dem die Maserung des Holzes sichtbar bleibt, wird dadurch erhalten, dass der Überzug Perlglanzpigmente enthält, die derartig auf der Holzoberfläche abgelagert sind, dass bei einer Beleuchtung unter einem Winkel von 10° zur Senkrechten auf die Holzoberfläche im gesamten Spektralbereich des sichtbaren Lichts von 380 bis 720 nm der spektrale Strahldichtefaktor $\beta_\lambda$ im Bereich der Holzporen bei einem Beobachtungswinkel von 45° grösser und bei einem Beobachtungswinkel von 22° zur Senkrechten auf die Holzoberfläche kleiner ist als im Bereich der glatten Flächen.

EP 0 053 381 A1

BASF Farben + Fasern Aktiengesellschaft, Hamburg

---

Pigmentierter Überzug und Verfahren zu seiner Herstellung

Die Erfindung betrifft einen pigmentierten Überzug auf einer Holzoberfläche, bei dem die Maserung des Holzes sichtbar bleibt und ein Verfahren zu seiner Herstellung.

Verschiedene Hölzer weisen eine kräftige Holzmaserung und Eigenfarbe auf, die teilweise als gestalterisches Element genutzt werden. Zu diesem Zweck werden die Hölzer mit farblosen oder transparent gefärbten Lacken oder Imprägniermitteln behandelt. Hierdurch bleibt die Maserung des Holzes sichtbar.

Es ist demgegenüber Aufgabe der Erfindung, einen Überzug für Holz zu schaffen, durch den die Maserung nicht nur sichtbar bleibt, sondern besonders kontrastreich betont wird.

Diese Aufgabe wird bei einem Überzug der eingangs genannten Art erfindungsgemäß dadurch gelöst, daß der Überzug Perlglanzpigmente enthält, die derartig auf der Holzoberfläche abgelagert sind, daß bei einer Beleuchtung unter einem
Winkel von 10$^o$ zur Senkrechten auf die Holzoberfläche
im gesamten Spektralbereich des sichtbaren Lichts von
380 - 720 nm der spektrale Strahldichtefaktor $\beta_\lambda$ im
Bereich der Holzporen bei einem Beobachtungswinkel von
45$^o$ größer und bei einem Beobachtungswinkel von 22$^o$ zur
Senkrechten auf die Holzoberfläche kleiner ist als im
Bereich der glatten Flächen.

Vorteilhaft enthält der Überzug zusätzlich zu den Perlglanzpigmenten färbende Pigmente und/oder Farbstoffe.
Die färbenden Pigmente sind vorzugsweise transparent.

Das erfindungsgemäße Verfahren zur Herstellung eines pigmentierten Überzuges auf einer Holzoberfläche, bei dem
die Maserung des Holzes sichtbar bleibt, durch Aufbringen
eines Lackes und anschließendes Härten ist dadurch gekennzeichnet, daß ein flüssiger Lack, der Perlglanzpigmente enthält, auf das Holz aufgebracht wird, wobei der
Lack teilweise in das Holz eindringt und die Perlglanzpigmente derartig auf der Holzoberfläche abgelagert
werden, daß nach dem Härten des Überzuges bei einer Beleuchtung unter einem Winkel von 10$^o$ zur Senkrechten auf
die Holzoberfläche im gesamten Spektralbereich des sichtbaren Lichts von 380 - 720 nm der spektrale Strahldichtefaktor $\beta_\lambda$ im Bereich der Holzporen in einem Beobachtungswinkel von 45$^o$ größer und bei einem Beobachtungswinkel
von 22$^o$ zur Senkrechten auf die Holzoberfläche kleiner ist
als im Bereich der glatten Flächen.

- 3 -

Die Konzentration der Perlglanzpigmente beträgt vorteilhaft 2 - 10 Gew.-% bezogen auf den fertigen Lack.

Die Erfindung betrifft ferner die Verwendung eines Perlglanzpigmente und gegebenenfalls färbende Pigmente und/oder Farbstoffe enthaltenden flüssigen Lackes zur kontrastreichen Darstellung der Maserung eines Holzes durch Aufbringen des Lackes auf das Holz und anschließendes Härten.

Perlglanzpigmente sind an sich bekannt. Sie bestehen aus flächen- oder nadelförmig ausgebildeten, transparenten Teilchen. Die Transparenz der flächigen Teilchen hat zur Folge, daß einfallendes Licht an zwei oder mehreren Flächen, je nach Struktur, reflektiert werden kann. Die auf dem Markt befindlichen Produkte umfassen eine breite Palette hinsichtlich chemischer Zusammensetzung, technischer Eigenschaften und Anwendbarkeit. Sie werden z.B. in Perlenlacken, Nagellacken, Lippenstiften und dergleichen verwendet.

Für den Fachmann überraschend wurde nun gefunden, daß unter Verwendung von Perlglanzpigmenten Überzüge auf Holz hergestellt werden können, durch die die Holzmaserung in effektvoller Weise betont werden kann.

Zur Herstellung der erfindungsgemäß zu verwendenden Überzugsmittel bzw. Lacke werden die Perlglanzpigmente durch Rühren in einen handelsüblichen Lack, z.B. einen Klarlack auf Nitro-Cellulose-, Polyurethan- oder Alkydharzbasis oder einen säurehärtenden Lack, eindispergiert. Diese Lacke sind nicht Gegenstand der Erfindung und brauchen daher nicht näher erläutert zu werden.

- 4 -

Es hat sich nun gezeigt, daß die Bestimmung des spektralen Strahldichtefaktors $\beta_\lambda$ in Abhängigkeit von der Wellenlänge des zur Beleuchtung verwendeten Lichtes nach DIN 5033 zur Charakterisierung der erfindungsgemäßen Überzüge geeignet ist. Die Messungen wurden mit einem registrierenden Spektralphotometer, das mit einem Winkelmeßkopf ausgerüstet war, durchgeführt.

Im folgenden wird die Erfindung an Hand der Zeichnung und an Hand von Ausführungsbeispielen näher erläutert. Es zeigen

Figur 1: ein mit einem erfindungsgemäßen Überzug versehenes Holz,

Figur 2: schematisch die Beleuchtungs- und Beobachtungsgeometrie zur Bestimmung des spektralen Strahldichtefaktors $\beta_\lambda$ ,

Figur 3: die Abhängigkeit des spektralen Strahldichtefaktors $\beta_\lambda$ von der Wellenlänge $\lambda$ bei einem mit einem erfindungsgemäßen Überzug versehenen Holz und

Figur 4: die Darstellung gemäß Figur 3 bei einem mit einem handelsüblichen Überzug ohne Perlglanzpigmente versehenen Holz.

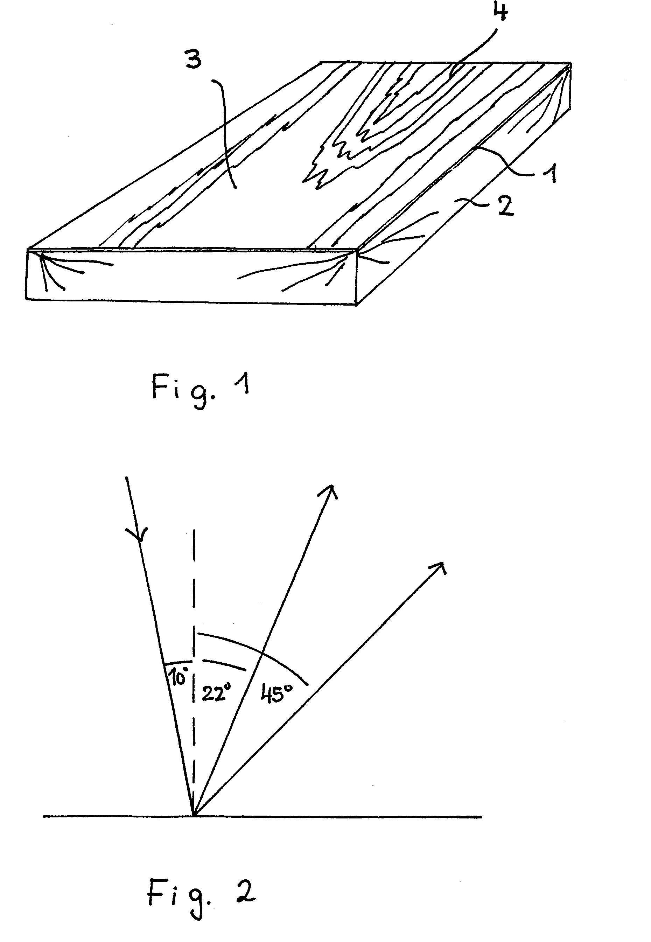

Gemäß Figur 1 ist eine Holzbohle 2 mit einem Überzug 1 versehen, der Perlglanzpigmente enthält. Durch den Überzug werden die Poren 4 gegenüber den glatten Flächen 3, die auch als Spiegel bezeichnet werden, besonders kontrastreich dargestellt.

Zur Bestimmung des spektralen Strahldichtefaktors
wird der Überzug 1, wie in Figur 2 dargestellt, unter
einem Winkel von 10$^o$ gemessen zur Senkrechten auf die
Holzoberfläche beleuchtet, während die Beobachtungswinkel
22$^o$ bzw. 45$^o$ betragen.

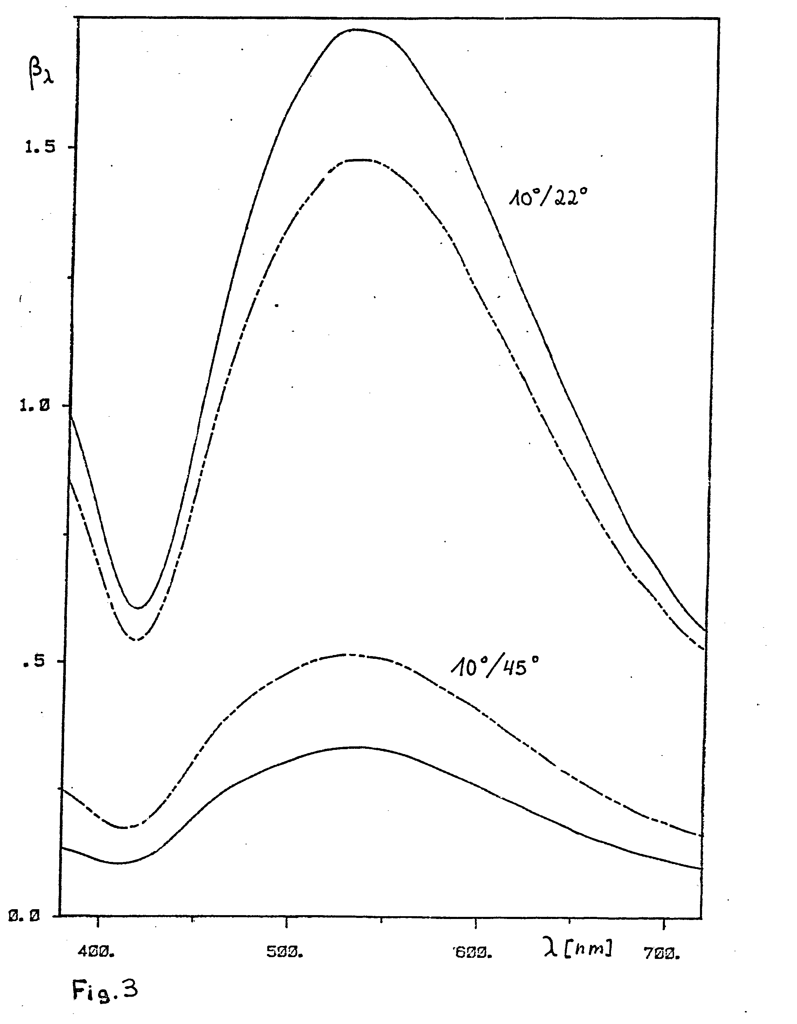

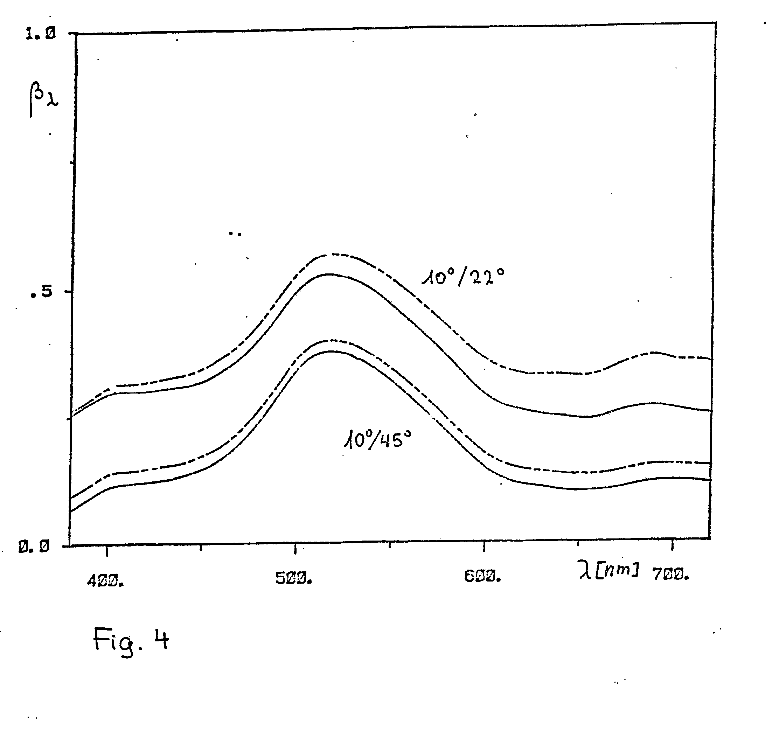

Die in den Figuren 3 und 4 dargestellten Werte des spektralen Strahldichtefaktors $\beta_\lambda$ sind Verhältniszahlen, die
sich dadurch ergeben, daß man einem Bariumsulfat-Standard
den Wert 1 zuordnet. Die gestrichelten Kurven betreffen
jeweils die Oberflächenbereiche der Poren 4, und die durchgezogenen Kurven betreffen die glatten Flächen 3. Wie
Figur 3 zeigt, ist nicht nur das Maximum des Strahldichtefaktors bei einem Beobachtungswinkel von 22$^o$ wesentlich
höher als bei einem Beobachtungswinkel von 45$^o$, sondern
es kehrt sich auch das Verhältnis zwischen den Werten für
die Poren 4 und für die glatten Flächen 3 um, das heißt,
der spektrale Strahldichtefaktor $\beta_\lambda$ ist im gesamten Spektralbereich des sichtbaren Lichts von 380 - 720 nm im Bereich der Holzporen 4 bei einem Beobachtungswinkel von
45$^o$ größer und bei einem Beobachtungswinkel von 22$^o$ zur
Senkrechten auf die Holzoberfläche kleiner als im Bereich
der glatten Flächen. Wie die Figur 4 zeigt, treten diese
Effekte, nämlich die deutliche Erhöhung des Maximums und
die Umkehr des genannten Verhältnisses bei einem Überzug
ohne Perlglanzpigmente nicht auf.

Beispiel 1:

In einen handelsüblichen Nitrocelluloseklarlack wurden
7 Gew.-% bezogen auf den fertigen Lack, Perlglanzpigment
(Iriodin® color GTi 100 der Firma E. Merck, Darmstadt)
durch Rühren eindispergiert. Der so zubereitete Lack wurde

- 6 -

mittels einer Spritzpistole auf Eschenholz aufgespritzt
und durch Lufttrocknen gehärtet.

Beispiel 2:

In einen handelsüblichen Klarlack auf Alkydharzbasis wurden
5 Gew.-% bezogen auf den fertigen Lack, Perlglanzpigment
(Iriodin color Y Ti100 der Firma E. Merck, Darmstadt) eingerührt. Der Lack wurde in gleicher Weise wie in Beispiel
1 auf Eichenholz appliziert.

Vergleichsbeispiel:

Ein handelsüblicher, grünpigmentierter Seidenglanzlack auf
Alkydharzbasis wurde auf Eschenholz appliziert.

Die gemäß Beispiel 1 und 2 erzielten Überzüge ergaben eine
ansprechende Holzoberfläche mit effektvoll betonter Maserung.
Es zeigte sich, daß die Stärke der Betonung der Maserung
vom Beobachtungswinkel abhängig war und daß die Poren je
nach Beobachtungswinkel dem Betrachter dunkler oder heller
als die glatten Flächen erschienen. Der gemäß Vergleichsbeispiel hergestellte Überzug ergab eine Oberfläche, bei der
die Maserung des Holzes zwar noch sichtbar, jedoch nicht
besonders kontrastreich dargestellt war.

Patentansprüche

1. Pigmentierter Überzug auf einer Holzoberfläche, bei dem die Maserung des Holzes sichtbar bleibt, dadurch gekennzeichnet, daß der Überzug Perlglanzpigmente enthält, die derartig auf der Holzoberfläche abgelagert sind, daß bei einer Beleuchtung unter einem Winkel von $10^{\circ}$ zur Senkrechten auf die Holzoberfläche im gesamten Spektralbereich des sichtbaren Lichts von 380 - 720 nm der spektrale Strahldichtefaktor $\beta_\lambda$ im Bereich der Holzporen bei einem Beobachtungswinkel von $45^{\circ}$ größer und bei einem Beobachtungswinkel von $22^{\circ}$ zur Senkrechten auf die Holzoberfläche kleiner ist als im Bereich der glatten Flächen.

2. Überzug nach Anspruch 1, dadurch gekennzeichnet, daß der Überzug zusätzlich zu den Perlglanzpigmenten färbende Pigmente und/oder Farbstoffe enthält.

3. Überzug nach Anspruch 2, dadurch gekennzeichnet, daß die färbenden Pigmente transparent sind.

4. Verfahren zur Herstellung eines pigmentierten Überzuges auf einer Holzoberfläche, bei dem die Maserung des Holzes sichtbar bleibt, durch Aufbringen eines Lackes und anschließendes Härten, dadurch gekennzeichnet, daß ein flüssiger Lack, der Perlglanzpigmente enthält, auf das Holz aufgebracht wird, wobei der Lack teilweise in das Holz eindringt und die Perlglanzpigmente derartig auf der Holzoberfläche abgelagert werden, daß nach dem Härten des Überzuges bei einer Beleuchtung unter einem Winkel von $10^{\circ}$ zur Senkrechten auf die Holzoberfläche im gesamten Spektralbereich des sichtbaren Lichts von 380 - 720 nm der spektrale Strahldichtefaktor $\beta_\lambda$ im Bereich der Holzporen in einem Beobachtungswinkel von 45° größer und bei einem Beobachtungswinkel
von 22° zur Senkrechten auf die Holzoberfläche kleiner ist
als im Bereich der glatten Flächen.

5. Verfahren nach Anspruch 4, dadurch gekennzeichnet, daß der
Lack Perlglanzpigmente in einer Konzentration von 2 - 10
Gew.-% bezogen auf den fertigen Lack enthält.

6. Verwendung eines Perlglanzpigmente und gegebenenfalls färbende Pigmente und/oder Farbstoffe enthaltenden flüssigen
Lackes zur kontrastreichen Darstellung der Maserung eines
Holzes durch Aufbringen des Lackes auf das Holz und anschließendes Härten.

0053381

Fig. 1

Fig. 2

Fig.3

0053381

Fig. 4

**Europäisches Patentamt**

**EUROPÄISCHER RECHERCHENBERICHT**

0053381

Nummer der Anmeldung

EP 81 10 9983

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | CHIMIA, Band 26, Juni 1972, Sauer-lander A.G. Verlag, Seiten 330-331 Aarau, CH. "Lacke mit Perl- und Perlmutt-effekt" <br><br> * Seite 330, rechte Spalte, Zeilen 25-27; Seite 331, linke Spalte, Zeilen 12-23, 35-36; Seite 331, rechte Spalte, Zeilen 24-28, 43-45,49 * | 1-6 |

-------

**KLASSIFIKATION DER ANMELDUNG (Int. Cl.³)**

C 09 D 5/36
B 05 D 7/08

**RECHERCHIERTE SACHGEBIETE (Int. Cl.³)**

C 09 D 5/36
        15/00
B 05 D 7/08
        7/10

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde lie-gende Theorien oder Grund-sätze
E: älteres Patentdokument, das jedoch erst am oder nach dem Anmeldedatum veröffentlicht worden ist
D: in der Anmeldung angeführtes Dokument
L: aus andern Gründen ange-führtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-02-1982 | DE ROECK |

EPA form 1503.1   06.78